# EUROPEAN PATENT APPLICATION

(11) **EP 4 541 827 A1**
(43) Date of publication of application: **23.04.2025**
(21) Application number: 22946963.0
(22) Date of filing: 29.06.2022
(51) Int. Cl.: C08F 220/18, C08F 220/06, C08F 220/44, C08F 218/08, C08F 220/56, C08L 33/06, H01M 50/411, H01M 50/431, H01M 10/0525

(54) **COPOLYMER FOR SEPARATOR AND SECONDARY BATTERY COMPRISING SAME**

(30) Priority: 16.06.2022 KR 20220073328
(71) Applicant: Hansol Chemical Co., Ltd, Seoul 06169 (KR)
(72) Inventor: LEE, Go-Eun, Wanju-gun, Jeollabuk-do 55321 (KR); JANG, Bo-Ok, Wanju-gun, Jeollabuk-do 55321 (KR); LEE, Nam-Joo, Wanju-gun, Jeollabuk-do 55321 (KR); CHO, Seung-Wan, Wanju-gun, Jeollabuk-do 55321 (KR); NOH, Myeong-Jun, Wanju-gun, Jeollabuk-do 55321 (KR); KIM, Jin-Yeong, Wanju-gun, Jeollabuk-do 55321 (KR); OH, Sae-Wook, Wanju-gun, Jeollabuk-do 55321 (KR); KWON, Se-Man, Wanju-gun, Jeollabuk-do 55321 (KR)
(74) Representative: Cabinet Laurent & Charras
(86) International application number: PCT/KR2022/009360
(87) International publication number: WO 2023/243757

(57) **Abstract**

The present invention relates to a copolymer, and a slurry composition, a separator, and a secondary battery that comprise same, wherein the copolymer comprises, based on 100 wt% of the total weight of the copolymer, 15 wt% or less of a vinylacetate monomer unit, 10-55 wt% of an acrylate-based monomer unit, and 1-10 wt% of an acrylic acid-based monomer unit bound with at least one selected from the group consisting of an alkali metal and an acetate salt compound comprising an alkali metal.

## Description

### Technical Field

The present disclosure relates to a copolymer, and a slurry composition, a separator, and a secondary battery including the copolymer.

### Background Art

Lithium secondary batteries have high energy density, so they are applied in a wide range of industrial fields, such as electrical, electronic, communication, and computer fields. Their application is expanding from small lithium secondary batteries for portable electronic devices to high-capacity secondary batteries for hybrid and electric vehicles.

A lithium-ion secondary battery is insulated by a separator. However, there is a possibility that the lithium-ion secondary battery is heated and exploded when a short-circuit between a positive electrode and a negative electrode occurs due to internal or external battery failure or impacts. Therefore, the most important consideration is to ensure thermal/chemical safety of the separator.

Currently, a polyolefin-based film is widely used as a separator. However, polyolefin has the disadvantage of high thermal shrinkage at high temperature and poor mechanical properties.

In an effort improve the stability of a polyolefin-based separator, an attempt has been made to develop a porous separator in which a polyolefin porous substrate film is coated with a mixture of inorganic particles and a binder.

That is, to suppress thermal shrinkage of the polyolefin-based separator caused by high temperature and battery instability caused by dendrite, there has been proposed a separator manufactured by coating one surface or two surfaces of a porous separator substrate with inorganic particles along with a binder so that the inorganic particles impart a function of suppressing shrinkage of the substrate and the coating layer provides the separator with improved safety.

To ensure excellent battery characteristics, the coating layer is required to be coated uniformly and have strong adhesive strength to the substrate.

Additionally, with the recent trend toward high capacity and high output, there is a need to further improve the heat resistance of conventional separators.

### [Documents of Related Art]

### [Patent Documents]

(Patent Document 1) Korean Patent No. 10-1430975
(Patent Document 2) Korean Patent Application Publication No. 10-2006-0072065

### Disclosure

### Technical Problem

Accordingly, the present disclosure has been made keeping in mind the above problems occurring in the related art, and one objective of the present disclosure is to provide a slurry composition having excellent inorganic adhesive strength and electrode adhesive strength to a porous substrate by using a copolymer.

Another objective of the present disclosure is to provide a separator having excellent adhesive strength and heat resistance by applying the slurry composition and a battery having excellent performance by using the separator.

The objectives of the present disclosure are not limited to those mentioned above, and other objectives not mentioned will be clearly understood by those skilled in the art from the description provided hereinafter.

### Technical Solution

According to one aspect of the present disclosure, there is provides a copolymer, including:
15 wt% or less of a vinylacetate monomer unit; 10 wt% to 55 wt% of an acrylate-based monomer unit; and 1 wt% to 10 wt% of an acrylic acid-based monomer unit based on 100 wt% of the total weight of the copolymer.

The acrylic acid-based monomer unit may be bound with at least one selected from the group consisting of an alkali metal and an acetate salt compound including an alkali metal.

According to another aspect of the present disclosure, there is provided a slurry composition, including:
the copolymer; and
inorganic particles.

According to another aspect of the present disclosure, there is provided a separator, including:
the slurry composition.

According to another aspect of the present disclosure, there is provded a secondary battery, including:
the separator.

### Advantageous Effects

A copolymer according to the present disclosure can increase adhesive strength of inorganic substances and electrodes to a separator substrate and improve heat resistance of a separator.

Additionally, a battery with excellent characteristics can be implemented.

### Best Mode

Hereinafter, the operation and effect of the present disclosure will be described in more detail through specific embodiments of the present disclosure. However, these embodiments are provided only for illustrative purposes and not intended for limiting the scope of the present disclosure.

All terms or words used in the specification and claims have the same meaning as commonly understood by one of ordinary skill in the art to which inventive concepts belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Therefore, embodiments disclosed herein are merely preferred examples of the present disclosure and do not fully describe the technical idea of the present disclosure, so it will be appreciated that there can be various equivalents and alterations thereto at a filing date of the present application.

As used herein, the singular forms are intended to include the plural forms as well, unless the context clearly indicates otherwise. It will be further understood that the terms "comprise", "include", "have", etc., when used in this specification, specify the presence of stated features, integers, steps, operations, elements, components, and/or combinations thereof but do not preclude the presence or addition of one or more other features, integers, steps, operations, elements, components, and/or combinations thereof.

In this specification, "a to b" and "a~b" indicating a numerical range are defined as ≥ a and ≤ b.

A copolymer according to one aspect of the present disclosure may include based on 100 wt% of the total weight of the copolymer, 15 wt% or less of a vinylacetate monomer unit, 10 to 55 wt% of an acrylate-based monomer unit, and 1 to 10 wt% of an acrylic acid-based monomer unit. The acrylic acid-based monomer unit may be bound with at least one selected from the group consisting of an alkali metal and an acetate salt compound including an alkali metal.

That is, the acrylic acid-based monomer unit may be bound with the alkali metal itself or with the acetate salt compound including the alkali metal.

When the content of the vinylacetate monomer unit exceeds the content range proposed by the present disclosure, stability problems such as polymerization stability and storage stability may occur. When the content of the acrylate-based monomer unit exceeds or falls below the content range proposed by the present disclosure, a decrease in adhesive strength may occur. When the content of the acrylic acid-based monomer unit bound with at least one selected from the group consisting of the alkali metal and the acetate salt compound including the alkali metal exceeds or falls below the content range proposed by the present disclosure, polymer aggregation and precipitation or a decrease in adhesive strength may occur.

The acetate salt compound containing the above alkali metal may increase its own cohesion and elasticity through coordination bond between acetate and inorganic ions or chemical attraction with dipoles, induced dipoles, and elements with high electronegativity.

Additionally, when a copolymer binder is coated and dried, a distance between elements becomes closer due to evaporation of water, and attractive force increases further, which may maximize the effect of improving adhesive strength.

In an embodiment, a weight ratio of at least one selected from the group consisting of the alkali metal and the acetate salt compound including the alkali metal to the copolymer (weight of at least one selected from the group consisting of the alkali metal and the acetate salt compound including the alkali metal: weight of the copolymer) may be 0.1 to 19:100.

For example, a weight ratio of at least one selected from the group consisting of the alkali metal and the acetate salt compound including the alkali metal to the copolymer may be 1 to 15:100.

When the weight ratio of at least one selected from the group consisting of the above alkali metal and the acetate salt compound including the alkali metal and the copolymer exceeds or falls below the weight ratio range proposed by the present disclosure, adhesive properties and heat resistance properties of a separator may be reduced. In particular, peel adhesive strength and electrode adhesive strength of the separator may be reduced.

Adhesive strength of the separator including at least one selected from the group consisting of the alkali metal and acetate salt compound including the alkali metal may be determined according to magnitude of cohesive force and repulsive force between elements.

In the copolymer according to the present disclosure, inorganic adhesive strength or electrode adhesive strength may be changed due to a change in superiority of cohesion, adhesive strength, and repulsion between elements depending on the content of at least one selected from the group consisting of the alkali metal and the acetate salt compound including the alkali metal.

When at least one selected from the group consisting of the alkali metal and acetate salt compound including alkali metal is used in the production of a binder copolymer, the overall adhesive strength is improved by harmony of adhesive strength and cohesion due to an increase in cohesion between elements. However, when it is added in an excessive content, cohesion may decrease and the overall adhesive strength may decrease.

Meanwhile, since improvement in inorganic adhesive strength means an increase in adhesive strength between an inorganic material and the substrate, this may mean that heat resistance properties of the separator may be improved by increasing the content of the inorganic material.

Electrode adhesive strength of the separator may reduce a defect rate that occurs when loading electrodes during battery assembly, minimize formation of pores, and improve ion conductivity within an electrolyte.

Additionally, when a binder layer is formed alone on an inorganic coating layer by coating, electrode adhesive strength may be maximized. Ultimately, electrode adhesive strength may minimize a battery failure rate and further improve battery performance.

In an embodiment, the copolymer may further include at least one selected from the group consisting of an acrylonitrile-based monomer unit and an acrylamide-based monomer unit.

Based on 100 wt% of the total weight of the copolymer, the copolymer may include 0.1 wt% to 10 wt% or less of the acrylonitrile-based monomer unit, and 1 wt% to 40 wt% of the acrylamide-based monomer unit.

When the content of the acrylonitrile-based monomer unit exceeds or falls below the content range proposed by the present disclosure, a decrease in dispersibility of polymer particles and dispersibility of inorganic slurry or a decrease in adhesive strength may occur.

Additionally, when the content of the acrylamide-based monomer unit exceeds the content range proposed by the present disclosure, adhesive strength may significantly decrease, and when the content thereof falls below the content range proposed by the present disclosure, heat resistance may decrease.

In an embodiment, the acrylate-based monomer unit may be formed by polymerizing at least one selected from the group consisting of methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl acrylate, sec-butyl methacrylate, tert-butyl acrylate, tert-butyl methacrylate, ethyl hexyl acrylate, ethyl hexyl methacrylate, lauryl acrylate, lauryl methacrylate, stearyl acrylate, and stearyl methacrylate.

Additionally, the acrylic acid-based monomer unit may be formed by polymerizing at least one selected from the group consisting of, for example, acrylic acid and methacrylic acid.

Meanwhile, the acrylonitrile-based monomer unit may be formed by polymerizing at least one selected from the group consisting of, for example, acrylonitrile and methacrylonitrile.

The acrylamide-based monomer unit may be formed by polymerizing at least one selected from the group consisting of, for example, acrylamide, methacrylamide, N-ethyl acrylamide, N-ethyl methacrylamide, N-propyl acrylamide, N-isopropyl acrylamide, N-isopropyl methacrylamide, N-butyl acrylamide, N-butyl methacrylamide, N-sec-butyl acrylamide, N-sec-butyl methacrylamide, N-tert-butyl acrylamide, and N-tert-butyl methacrylamide.

In an embodiment, the copolymer may include a monomer repeating unit represented by the following chemical formula 1.

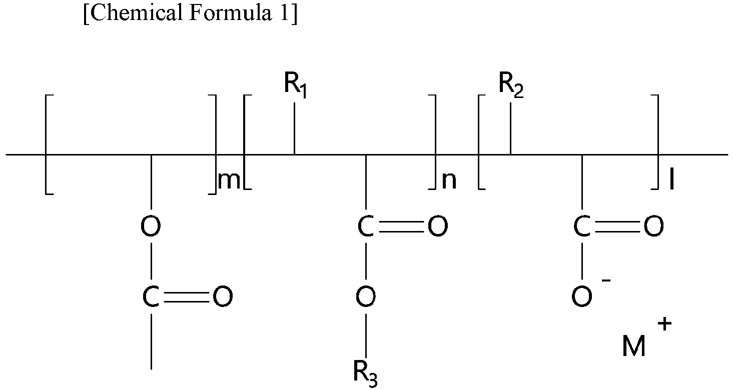

In chemical formula 1,
R₁ and R₂ may each independently be hydrogen; a linear or branched hydrocarbon having 1 to 4 carbon atoms; or a combination thereof, R₃ may be hydrogen; a linear or branched hydrocarbon having 1 to 20 carbon atoms; or a combination thereof, M⁺ may be an alkali metal; an acetate salt including an alkali metal; or a combination thereof, and m, n, and l may be m+n+l=1.

In chemical formula 1, m, n, and l correspond to mole fractions of each monomer unit, and the sum of mole fractions of each monomer unit is 1.

In an embodiment, the acetate salt compound including the alkali metal may be represented by the following chemical formula 2.

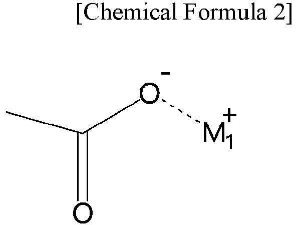

In chemical formula 2,
M₁⁺ may be an alkali metal.

The alkali metal may be, but is not limited to, Li, Na, or K.

In an embodiment, R₁ and R₂ may each independently be at least one selected from the group consisting of hydrogen and methyl, and R₃ may be at least one selected from the group consisting of hydrogen, methyl, ethyl, propyl, isopropyl, butyl, sec-butyl, tert-butyl, ethylhexyl, n-pentyl, n-hexyl, n-heptyl, n-octyl, 2-ethylhexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-icosyl, n-henicosyl, n-docosyl, iso-pentyl, iso-heptyl, iso-octyl, iso-nonyl, iso-decyl, iso-undecyl, iso-dodecyl, iso-tridecyl, iso-tetradecyl, iso-pentadecyl, iso-cetyl, iso-hexadecyl, iso-heptadecyl, iso-stearyl, iso-octadecyl, iso-nonadecyl, iso-icosyl, iso-henicosyl, and iso-docosyl.

In an embodiment, the copolymer may be a random or block copolymer depending on a synthesis process.

In an embodiment, a number average molecular weight of the copolymer may be 10,000 to 1,000,000.

When the number average molecular weight of the copolymer is less than 10,000, fluidity of the copolymer may increase, resulting in a decrease in dispersibility and a decrease in heat resistance of the separator. When the number average molecular weight thereof exceeds 1,000,000, viscosity may be too high for use and pores of the separator may be blocked, resulting in a decrease in air permeability and resistance.

A slurry composition according to another aspect of the present disclosure may include the copolymer and inorganic particles.

The inorganic particles may be used without limitation as long as they are insulating particles, and preferably, they may be high-dielectric constant insulating particles.

Specific examples of the inorganic particles may include Al₂O₃, AlOOH, SiO₂, TiO₂, ZrO₂, ZnO, NiO, CaO, SnO₂, Y₂O₃, MgO, BaTiO₃, CaTiO₃, SrTiO₃, SiC, Li₃PO₄, Pb(Zr,Ti)O₃ (PZT), (Pb,La)(Zr,Ti)O₃ (PLZT), and a mixture thereof.

The inorganic particles have no particular limitation on size, but for example, may have an average particle diameter of 0.01 µm to 30 µm, and more preferably 0.1 µm to 10 µm. When the average particle diameter of the inorganic particles is less than the above preferred range, dispersibility may decrease, and when the average particle size thereof exceeds the above preferred range, a coating layer after coating may become thicker, resulting in a decrease in mechanical properties.

Additionally, the inorganic particles have no particular limitation on shape, and may have, for example, a spherical, plate-shaped, elliptical, or irregular shape.

A separator according to another aspect of the present disclosure may include the slurry composition.

The separator may have a peel adhesive strength of 6 to 11 gf/mm, a dry adhesive strength of 3.5 to 5 gf/mm, and a wet adhesive strength of 11 to 16 gf/mm.

A separator may be manufactured by at least one surface of a porous substrate film with the slurry composition, or by manufacturing the slurry composition in a film form and laminating it to a porous substrate film.

Meanwhile, the separator may be used as a separator for a secondary battery, and may be used, for example, as a separator for a lithium secondary battery.

An example of a method of manufacturing a separator may include the steps of: (a) preparing a polymer solution by dissolving or dispersing the copolymer in a solvent; (b) adding and mixing inorganic particles into the polymer solution of step a); and coating at least one region selected from the group consisting of a surface of a polyolefin-based separator substrate and a part of pores of the substrate with the resultant mixture of step (b), followed by drying.

First, 1) the polymer solution in which the copolymer is dissolved or dispersed in an appropriate solvent.

The solvent is preferably one having a similar solubility index to the copolymer used as a binder and a low boiling point. This is to facilitate uniform mixing and subsequent solvent removal. Non-limiting examples of usable solvents include acetone, tetrahydrofuran, methylene chloride, chloroform, dimethylformamide, N-methyl-2-pyrrolidone (NMP), cyclohexane, water, or a mixture thereof. More preferably, these solvents may be used in a state of being dissolved in water.

2) The inorganic particles are added and dispersed in the prepared polymer solution to prepare a mixture of the inorganic particles and the polymer.

It is preferable to carry out a dispersion process of the polymer solution and the inorganic particles. At this time, a dispersion time of 1 to 50 hours may be appropriate. As a dispersion method, any conventional known methods may be used, and in particular, a ball mill method is preferable.

Although there is no particular limitation on the composition of the mixture containing the inorganic particles and the polymer, such composition may contribute to control thickness, pore size, and porosity of a finally manufactured organic/inorganic composite porous separator.

That is, as a weight ratio (I/P) of the inorganic particles (I) to the polymer (P) increases, the porosity of the separator increases. As a result, the thickness of the separator may increase under the same solid content (weight of the inorganic particles + weight of the polymer). Additionally, the possibility of forming pores between the inorganic particles increases, which increases the pore size. At this time, as the size (particle diameter) of the inorganic particles increases, an interstitial distance among the inorganic particles increases, thereby increasing the pore size.

3) The prepared polyolefin-based separator substrate is coated with the prepared mixture of the inorganic particles and the polymer and then dried to obtain a separator according to the present disclosure.

At this time, as a method of coating the polyolefin-based separator substrate with the mixture of the inorganic particles and the polymer, any conventional known coating methods may be used, and various methods such as dip coating, die coating, roll coating, comma coating, or a mixed method thereof may be used. Additionally, coating of the polyolefin-based separator substrate with the mixture of the inorganic particles and the polymer may be performed on two surfaces of the separator substrate, or may be selectively performed on one surface of the separator substrate.

When the separator is used in a secondary battery, lithium ions may be transferred not only through the separator substrate but also through a porous active layer, and when an internal short-circuit occurs due to an external impact, the aforementioned safety improvement effect may be exhibited.

Additionally, the secondary battery may include a positive electrode, a negative electrode, the separator interposed between the positive electrode and the negative electrode, and an electrolyte.

The secondary battery may be manufactured according to a method known to one skilled in the art. For example, the secondary battery may be manufactured by assembling electrodes and a separator interposed therebetween and then injecting an electrolyte into the resultant assembly.

There is no particular limitation on the electrodes to be applied with the separator. As a positive electrode active material, any conventional positive electrode active materials currently used in a positive electrode of a secondary battery may be used. Non-limiting examples thereof include lithium intercalation materials such as lithiated magnesium oxide, lithiated cobalt oxide, lithiated nickel oxide, or a composite oxide formed by a combination thereof. Additionally, as a negative electrode active material, any conventional negative electrode active materials currently used in a negative electrode of a conventional electrochemical device may be used. Non-limiting examples thereof include lithium metal, a lithium alloy, or lithium adsorption materials such as carbon, petroleum coke, activated carbon, graphite, or other carbonaceous materials. The positive electrode active materials described above may bonded to each of a positive current collector, i.e., a foil made of aluminum, nickel, or a combination thereof, and a negative current collector, i.e., a foil made of copper, gold, nickel, a copper alloy, or a combination thereof, to form a positive electrode.

The electrolyte is a salt represented by the formula of A+B-, wherein A+ is an alkali metal cation selected from the group consisting of Li+, Na+, K+, and a combination thereof, and B- is an anion selected from the group consisting of PF₆-, BF₄-, Cl-, Br-, I-, ClO₄-, AsF₆-, CH₃CO₂-, CF₃SO₃-, N(CF₃SO₂)₂-, C(CF₂SO₂)₃-, and a combination thereof, the salt being dissolved or dissociated in an organic solvent selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (GBL), and a mixuture thereof.

Processes that may be used for applying the separator to a battery include not only a conventional winding process but also a stacking and folding process of a separator and electrodes.

### Mode for Invention

Hereinafter, the present disclosure will be described in more detail through examples, but the present disclosure is not limited to these examples.

### [Preparation Example 1] Preparation of Copolymer

0.1 to 3 parts by weight of an emulsifier was added to 200 parts by weight of distilled water and 100 parts by weight of a monomer mixture in a reaction vessel, and the resultant mixture was heated to 70°C and stirred while injecting high-purity nitrogen gas. 0.1 to 0.5 parts by weight of potassium persulfate, which is a decomposition initiator, was added to 100 parts by weight of the monomer mixture in the reaction vessel prepared at 60°C, and the resultant mixture was subjected to a continuous polymerization reaction to form a copolymer.

To the copolymer obtained by the polymerization reaction (emulsion polymerization reaction), an aqueous solution of metal hydroxide (NaOH, LiOH, KOH) was added to form a neutralized copolymer.

To the neutralized copolymer, an acetate salt compound including an alkali metal in a controlled amount was added to 100 parts by weight of the copolymer and reacted to form a binder copolymer.

### [Preparation Example 2] Preparation of Slurry for Porous Film Coating

After mixing inorganic particles (alumina, average particle diameter of 0.5 µm) and the binder copolymer obtained according to Preparation Example 1 at a solid weight ratio of 80:20, distilled water was added so that the solid concentration became 35%. The resultant mixture was sufficiently dispersed using a ball mill method or a mechanical stirrer to form a slurry.

### [Preparation Example 3] Manufacture of Separator

The slurry for porous film coating obtained according to Preparation Example 2 was applied to a polyolefin porous substrate (polyethylene (PE), polypropylene (PP), etc.) to form an inorganic coating layer. As a coating method, various coating methods such as dip coating, die coating, gravure coating, and comma coating may be used.

After coating, drying was performed using a method such as hot air, hot air, vacuum drying, or infrared drying. The drying temperature range was 40°C to 80°C.

The thickness of the inorganic coating layer was 1 to 6 µm on one surface or two surfaces of the substrate. When the thickness thereof was less than 1 µm, there was a problem in that heat resistance of the separator significantly decreased, and when the thickness thereof exceeded 6 µm, the separator was too thick, thereby reducing energy density of the battery and increasing resistance of the battery.

### [Examples and Comparative Examples]

Examples 1 to 5 and Comparative Examples 1 and 2 were prepared according to Preparation Example 1 by controlling the content of an acetate salt compound including an alkali metal as illustrated in Table 1 below.

Monomers used in Examples and Comparative Examples were vinylacetate (10 wt%), acrylonitrile (35 wt%), butylacrylate (50 wt%), and acrylic acid (5 wt%).

That is, after the vinylacetate, butylacrylate, and acrylic acid were subjected to emulsion polymerization, NaOH was added and reacted. An acetate salt compound (sodium acetate) including an alkali metal was then added in a controlled amount and reacted to form a binder copolymer.

Using binder copolymers prepared according to Examples 1 to 5 and Comparative Examples 1 and 2, a slurry for porous film coating and a separator were produced according to Preparation Example 2 and Preparation Example 3, respectively.

**[Table 1]**

| Classification | Parts by weight of acetate salt compound including alkali metal |
|---|---|
| | (per 100 weight parts of copolymer) |
| Example 1 | 1 |
| Example 2 | 4 |
| Example 3 | 7 |
| Example 4 | 10 |
| Example 5 | 15 |
| Comparative Example 1 | 0 |
| Comparative Example 2 | 20 |

### [Evaluation Example 1] Adhesive Strength (Peel Adhesive Strength) of Slurry for Porous Film Coating

A separator manufactured according to Preparation Example 3 using the binder copolymers of Examples 1 to 5 and Comparative Examples 1 and 2 was cut to a size of 18 mm in width and 100 mm in length.

A double-sided tape measuring 20 mm in width and 40 mm in length was attached to an acrylic plate measuring 40 mm in width and 100 mm in length. After attaching the prepared separator onto the double-sided tape, it was gently pressed five times with a hand roller to form a specimen.

The prepared specimen was mounted on a universal testing machine (UTM) (equipped with a 1 kgf loadcell) by fixing one side of the separator to an upper clip of the tensile tester and the tape attached to one side of the separator to a lower clip, and then the 180° peel strength was measured at a speed of 100 mm/min. At least five specimens were prepared for each sample. The 180° peel strength of each of the specimens was measured and the average value was calculated.

### [Evaluation Example 2] Dry Adhesive Strength of Separator

A separator manufactured according to Preparation Example 3 using the binder copolymers of Examples 1 to 5 and Comparative Examples 1 and 2 was cut to a size of 20 mm in width and 70 mm in length.

After placing an electrode cut to 25 mm in width and 70 mm in length on the prepared separator, a temperature of 65°C and a pressure of 500kg were applied for 30 seconds using a hot-press to form a specimen.

The prepared specimen was mounted on a universal testing machine (UTM) (equipped with a 3 kgf loadcell) by fixing one side of the separator to an upper clip of the tensile tester and the tape attached to one side of the separator to a lower clip, and then the 180° peel strength was measured at a speed of 100 mm/min. At least five specimens were prepared for each sample. The 180° peel strength of each of the specimens was measured and the average value was calculated.

### [Evaluation Example 3] Wet Adhesive Strength of Separator

A separator manufactured according to Preparation Example 3 using the binder copolymers of Examples 1 to 5 and Comparative Examples 1 and 2 was cut to a size of 20 mm in width and 70 mm in length.

After placing an electrode cut to 25 mm in width and 70 mm in length on the prepared separator, they were enclosed in an aluminum pouch and immersed in an electrolyte at room temperature for 12 hours. After that, a temperature of 65°C and a pressure of 500kgf were applied using a hot-press to form a specimen.

The prepared specimen was mounted on a universal testing machine (UTM) (equipped with a 3 kgf loadcell) by fixing one side of the separator to an upper clip of the tensile tester and the tape attached to one side of the separator to a lower clip, and then the 180° peel strength was measured at a speed of 100 mm/min. At least five specimens were prepared for each sample. The 180° peel strength of each of the specimens was measured and the average value was calculated.

The evaluation results of Evaluation Examples 1 to 3 are illustrated in Table 2 below.

**[Table 2]**

| Classification | Peel Adhesive Strength (gf/mm) | Electrode Adhesive Strength (gf/mm) | |
|---|---|---|---|
| | | Dry | Wet |
| Example 1 | 11 | 3.5 | 14.8 |
| Example 2 | 10 | 4.6 | 14.4 |
| Example 3 | 10.2 | 4.5 | 15.4 |
| Example 4 | 8.4 | 4.7 | 11.4 |
| Example 5 | 6.1 | 5 | 13.8 |
| Comparative Example 1 | 4.2 | 3.3 | 8 |
| Comparative Example 2 | 4.5 | 3.3 | 9.1 |

From the measurement results in Table 2 above, it was confirmed that the content of acetate salt compound affected peel adhesive strength and electrode adhesive strength.

That is, it was confirmed that the separator manufactured using the binder copolymers of Examples 1 to 5 prepared by adding the acetate salt compound exhibited improved peel adhesive strength, dry adhesive strength, and wet adhesive strength compared to the separator using the binder copolymer of Comparative Example 1 prepared without using the acetate salt compound.

Meanwhile, it was confirmed that the separator manufactured using the binder copolymer of Comparative Example 2, which was prepared by excessively adding the acetate salt compound, exhibited low peel adhesive strength, dry adhesive strength, and wet adhesive strength compared to the separators manufactured using the binder copolymers of Examples 1 to 5.

That is, by using the binder copolymer to which the acetate salt compound within the content range proposed by the present disclosure is added, it is possible to manufacture a separator having excellent peel adhesive strength, dry adhesive strength, and wet adhesive strength.

Additionally, by using the separator with excellent heat resistance and adhesive properties in which the binder copolymer to which the acetate salt compound within the content range proposed by the present disclosure is added, it is possible to improve performance of a secondary battery.

The scope of the present disclosure is defined by the accompanying claims rather than the description which is presented above. Moreover, the present disclosure is intended to cover not only the exemplary embodiments, but also various alternatives, modifications, equivalents and other embodiments that may be included within the spirit and scope of the present disclosure as defined by the appended claims.

### Industrial Applicability

A copolymer according to the present disclosure may increase adhesive strength of inorganic substances and electrodes to a separator substrate and improve heat resistance of a separator.

Additionally, a battery with excellent characteristics may be implemented.

## Claims

1. A copolymer, comprising:
15 wt% or less of a vinylacetate monomer unit;
10 wt% to 55 wt% of an acrylate-based monomer unit; and
1 wt% to 10 wt% of an acrylic acid-based monomer unit based on 100 wt% of the total weight of the copolymer,
wherein the acrylic acid-based monomer unit is bound with at least one selected from the group consisting of an alkali metal and an acetate salt compound including an alkali metal.

2. The copolymer of claim 1, wherein a weight ratio of the at least one selected from the group consisting of the alkali metal and the acetate salt compound including the alkali metal to the copolymer (weight of the at least one selected from the group consisting of the alkali metal and the acetate salt compound including the alkali metal: weight of the copolymer) is 0.1 to 19: 100.

3. The copolymer of claim 1, wherein the copolymer further includes at least one selected from the group consisting of an acrylonitrile-based monomer unit and an acrylamide-based monomer unit.

4. The copolymer of claim 1, wherein the acrylate-based monomer unit is formed by polymerizing at least one selected from the group consisting of methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl acrylate, sec-butyl methacrylate, tert-butyl acrylate, tert-butyl methacrylate, ethyl hexyl acrylate, ethyl hexyl methacrylate, lauryl acrylate, lauryl methacrylate, stearyl acrylate, and stearyl methacrylate, and
the acrylic acid-based monomer unit is formed by polymerizing at least one selected from the group consisting of acrylic acid and methacrylic acid.

5. The copolymer of claim 1, wherein the copolymer includes a monomer repeating unit represented by the following chemical formula 1, 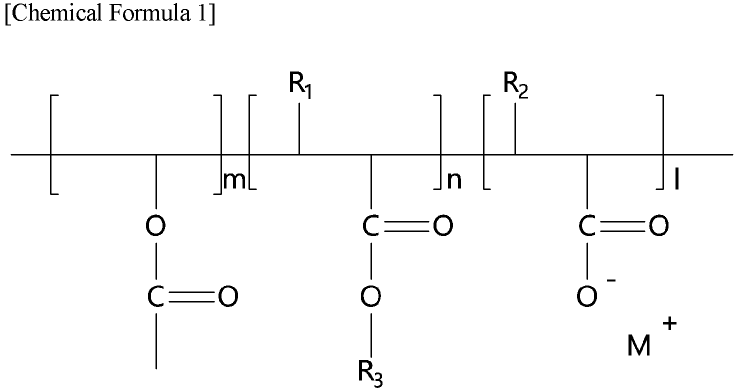 wherein in chemical formula 1,
R₁ and R₂ are each independently hydrogen; a linear or branched hydrocarbon having 1 to 4 carbon atoms; or a combination thereof,
R₃ is hydrogen; a linear or branched hydrocarbon having 1 to 20 carbon atoms; or a combination thereof,
M⁺ is an alkali metal; an acetate salt including an alkali metal; or a combination thereof, and
m, n, and l are m+n+l=1.

6. The copolymer of claim 5, wherein the acetate salt compound including the alkali metal is represented by the following chemical formula 2, 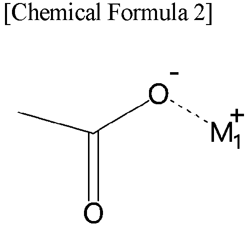 wherein in chemical formula 2,
M₁⁺ is an alkali metal.

7. The copolymer of claim 5, wherein R₁ and R₂ are each independently at least one selected from the group consisting of hydrogen and methyl, and
R₃ is at least one selected from the group consisting of hydrogen, methyl, ethyl, propyl, isopropyl, butyl, sec-butyl, tert-butyl, ethylhexyl, n-pentyl, n-hexyl, n-heptyl, n-octyl, 2-ethylhexyl, n-nonyl, n-decyl, n-undecyl, lauryl, n-dodecyl, n-tridecyl, n-tetradecyl, n-pentadecyl, cetyl, n-hexadecyl, n-heptadecyl, stearyl, n-octadecyl, n-nonadecyl, n-icosyl, n-henicosyl, n-docosyl, iso-pentyl, iso-heptyl, iso-octyl, iso-nonyl, iso-decyl, iso-undecyl, iso-dodecyl, iso-tridecyl, iso-tetradecyl, iso-pentadecyl, iso-cetyl, iso-hexadecyl, iso-heptadecyl, iso-stearyl, iso-octadecyl, iso-nonadecyl, iso-icosyl, iso-henicosyl, and iso-docosyl.

8. The copolymer of claim 1, wherein the copolymer is a random or block copolymer.

9. A slurry composition, comprising:
the copolymer of any one of claims 1 to 8; and
inorganic particles.

10. A separator, comprising:
the slurry composition of claim 9.

11. A secondary battery, comprising:
the separator of claim 10.
